# EUROPEAN PATENT SPECIFICATION

(11) **EP 2 281 736 B1**
(45) Date of publication and mention of the grant of the patent: **11.06.2014**
(21) Application number: 10171247.9
(22) Date of filing: 29.07.2010
(51) Int. Cl.: B62J 6/04, F21V 7/00

(54) **Taillight and motorcycle**
Schlusslicht und Motorfahrrad
Feu rouge arrière et motocyclette

(30) Priority: 04.08.2009 JP 2009181962
(43) Date of publication of application: 09.02.2011
(73) Proprietor: Yamaha Hatsudoki Kabushiki Kaisha, Iwata-shi Shizuoka (JP)
(72) Inventor: Isayama, Hiroyuki, Iwata-shi Shizuoka (JP); Phansua, Jaruwat, 10540, Samutprakarn (TH)
(74) Representative: Grünecker, Kinkeldey, Stockmair & Schwanhäusser

(56) References cited:
- US-A1- 2006 181 892
- US-A1- 2007 230 202

## Description

### BACKGROUND OF THE INVENTION

### Field of the Invention

The present invention relates to taillights and motorcycles, and more specifically to a taillight for a motorcycle with a sharply-angled tail portion extending in an obliquely rearward and upward direction; and to a motorcycle including the taillight.

### Description of the Related Art

Conventionally, there is a type of motorcycles in which the motorcycle body has a sharply-angled tail portion extending in an obliquely rearward and upward direction. Taillights to be disposed in such tail portions of these motorcycle bodies need to be thin (with a small dimension in an up-down direction).

JP-A 2006-222029, according to the preamble of claim 1, discloses a conventional technique for this type of requirement. The disclosure includes a motorcycle having a taillight which has a disc-shaped translucent member. Along the edge portion of the translucent member, there are light emitting positions, from which light is thrown outward. The light emitted from a light source is reflected by a bowl-shaped reflection member surrounding the light source. The reflection member is divided radially into regions by a predetermined angle, and the light is reflected by each of these regions toward a corresponding light emitting position in the translucent member.

It is difficult to form this conventional taillight into a thin shape since its bowl-shaped reflection member has a substantially vertical bowl edge. In other words, this reflection member is intended to be disposed in an upright position, so that it looks large in a rear view and improves visual recognition; but a problem with this arrangement is that the taillight increases the thickness of the rear portion in the motorcycle body where it is disposed.

In an attempt to ensure sufficient visual recognition even if the taillight is made thin, the inventors of the present application discussed on arrangements for moving the taillight's light emitting positions to a higher level. However, in cases where a motorcycle body has a sharply-angled tail portion extending in an obliquely rearward and upward direction as described earlier, moving the taillight's light source to a higher position means that the light source is moved rearward, resulting in an increased distance between the light source and the center of the motorcycle body. Therefore, the light source is subject to increased vibration, which makes is impossible to achieve good visual recognition. Thus, it has been difficult to move taillight's light emitting positions to a high level for improving visual recognition.

### SUMMARY OF THE INVENTION

Therefore, a primary object of the present invention is to provide a taillight which can be formed in a thin shape and can improve visual recognition, and to provide a motorcycle including the taillight.

According to an aspect of the present invention, there is provided a taillight which includes: a light source; a holding member for holding the light source, having an eave portion extending from above the light source in an obliquely rearward and upward direction; and a translucent member having at least a first translucent portion and a second translucent portion located at an obliquely rearward and upward position from the first translucent portion, and covering the holding member from behind. With the above arrangement, the eave portion includes: a first reflection surface located above the light source for reflecting light from the light source toward the first translucent portion; and a second reflection surface located at an obliquely rearward and upward position from the first reflection surface for reflecting light from the light source toward the second translucent portion.

According to the present invention, the eave portion which reflects light toward the first translucent portion and the second translucent portion of the translucent member extends from above the light source in an obliquely rearward and upward direction, and is not formed below the light source. Thus, it is possible to make the taillight in a thin shape. Specifically, the taillight's dimension in an up-down direction can be decreased. Also, even if the light source is placed at a relatively low level as a result of mounting the taillight on a motorcycle, the first translucent portion and the second translucent portion, i.e., portions supplied with light, are located at a higher level than the light source. Thus, the arrangement is capable of providing light emitting positions of the taillight at high levels, and improving visual recognition of the taillight.

Preferably, the translucent member further includes a third translucent portion located at a lower position than the first translucent portion. The third translucent portion directly receives light which travels rearward from the light source. In this case, the arrangement makes it possible to dispose a greater number of translucent portions in the vertical direction in a rear view, than the total number of the reflection surfaces.

Further preferably, the taillight further includes a non-translucent member which does not have translucency, provided to cover a region between the first translucent portion and the second translucent portion. In this case, the arrangement shows the first translucent portion and the second translucent portion as separated from each other in a rear view. As a result, emphasis is made on a plurality of light emitting positions, leading to further improvement in visual recognition of the taillight.

Further, preferably, at least one of light supply from the first reflection surface to the first translucent portion and light supply from the second reflection surface to the second translucent portion is concentration irradiation. In this case, the arrangement creates an effect that the taillight looks as if it had as many light sources as the translucent portions which are receiving concentration irradiation of light. This further improves visual recognition of the taillight.

Preferably, at least one of the first translucent portion and the second translucent portion is convex in a rearward direction. In this case, the arrangement enhances the visual effect that the taillight looks as if having as many light sources as the convex translucent portions.

Further preferably, the first reflection surface makes concentration irradiation of light toward the first translucent portion, and the second reflection surface makes parallel irradiation of light toward the second translucent portion. In this case, the arrangement makes the second translucent portion, which is located at an upper level, have a higher brightness than the first translucent portion which is located at a lower level, leading to further improvement in visual recognition of the taillight.

Further, preferably, the translucent member includes a fourth translucent portion provided at least on one side of the second translucent portion, and the eave portion includes a third reflection surface provided at least on one side of the first reflection surface and the second reflection surface. With the above, the third reflection surface reflects light from the light source toward the fourth translucent portion. In this case, the light emitting positions are concentrated at a relatively high level, leading to further improvement in visual recognition of the taillight.

Preferably, the fourth translucent portion is provided on both sides of the second translucent portion, and the first translucent portion, the second translucent portion and the fourth translucent portion are disposed in a shape like a character T. By disposing the fourth translucent portion at a high level and on both sides of the second translucent portion as described, the arrangement further improves visual recognition of the taillight.

Further preferably, the second translucent portion has a greater area than the first translucent portion. In this case, since the second translucent portion which is located at an upper level has a larger area than the first translucent portion which is located at a lower level, the arrangement leads to further improvement in visual recognition of the taillight.

Further, preferably, the second reflection surface has a greater area than the first reflection surface. In this case, the arrangement makes a greater amount of light received by the second translucent portion which is located at an upper level, leading to further improvement in visual recognition of the taillight.

Preferably, the taillight further includes a jaw portion located below the light source. The jaw portion has light-shielding capability and has an opening for light from the light source to pass through. In this case, a license plate may be placed below the light source (below the taillight), so that light from the light source which passes through the opening will light up the license plate. The arrangement allows easy recognition of the information indicated on the license plate even at night for example. Although the light source is located at a low level in order to light the license plate, the eave portion has a plurality of reflection surfaces, and the light reflected thereby is received by the translucent portions which are disposed at a higher level than the light source. The arrangement makes it possible to provide light emitting positions of the taillight at high levels, and to improve visual recognition of the taillight.

The taillight according to the present invention is suitably applicable to motorcycles.

It should be noted here that the term "concentration irradiation" means that light is focused to a point.

The above-described object and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a side view of a motorcycle according to an embodiment of the present invention.
Fig. 2 is a side view of a taillight according to an embodiment of the present invention.
Fig. 3 is a rear view of the taillight.
Fig. 4 is a plan view of the taillight.
Fig. 5 is a front view of the taillight.
Fig. 6 is an exploded perspective view of the taillight.
Fig. 7 is a rear view of a holding member included in the taillight.
Fig. 8 is a sectional view taken in lines A-A in Fig. 3.
Fig. 9 is a sectional view taken in lines B-B in Fig. 3.
Fig. 10 is a sectional view taken in lines C-C in Fig. 3.
Fig. 11 is a sectional view taken in lines D-D in Fig. 3.

### DETAILED DESCRIPTION OF THE PREFERRED EMBODIMENTS

Hereinafter, embodiments of the present invention will be described with reference to the drawings.

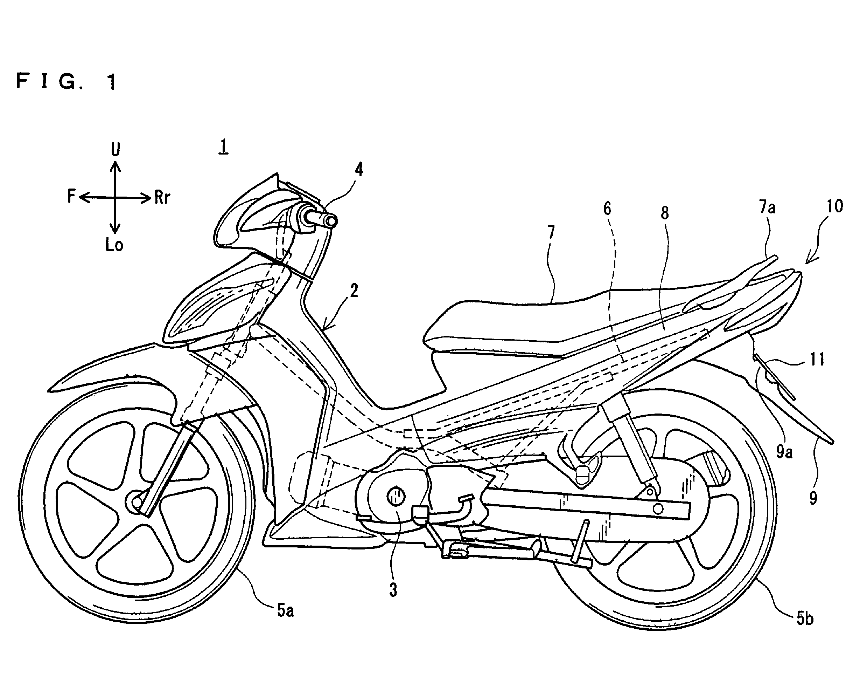

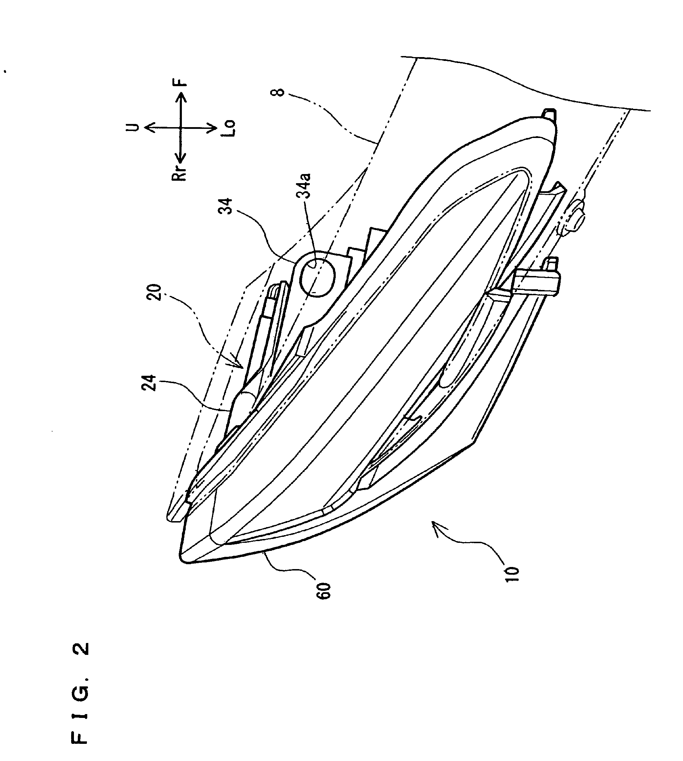

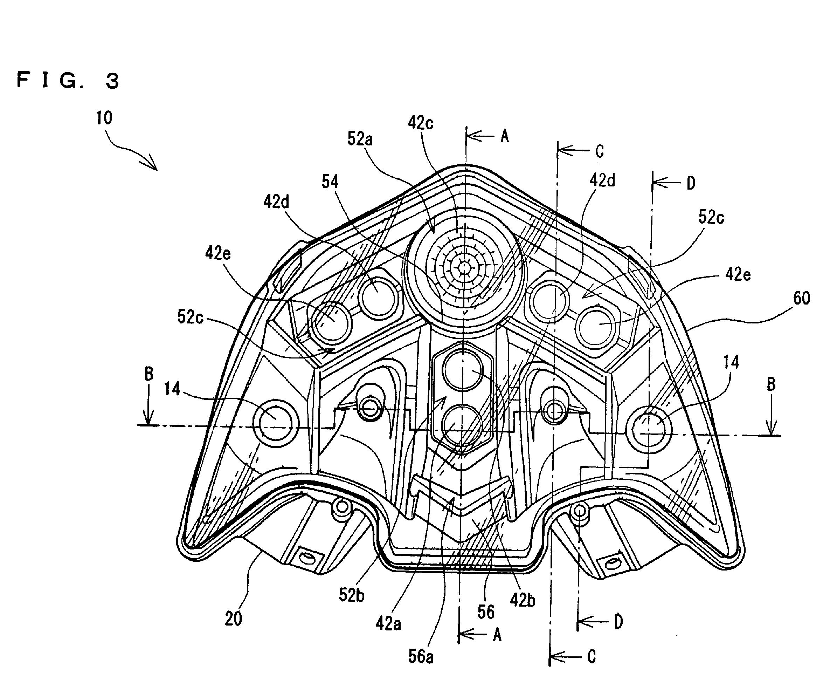

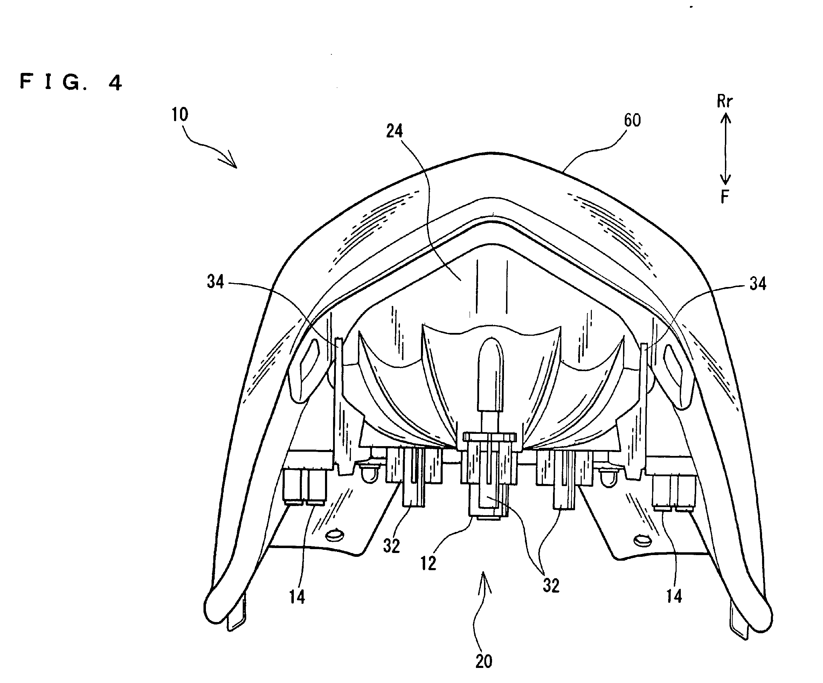

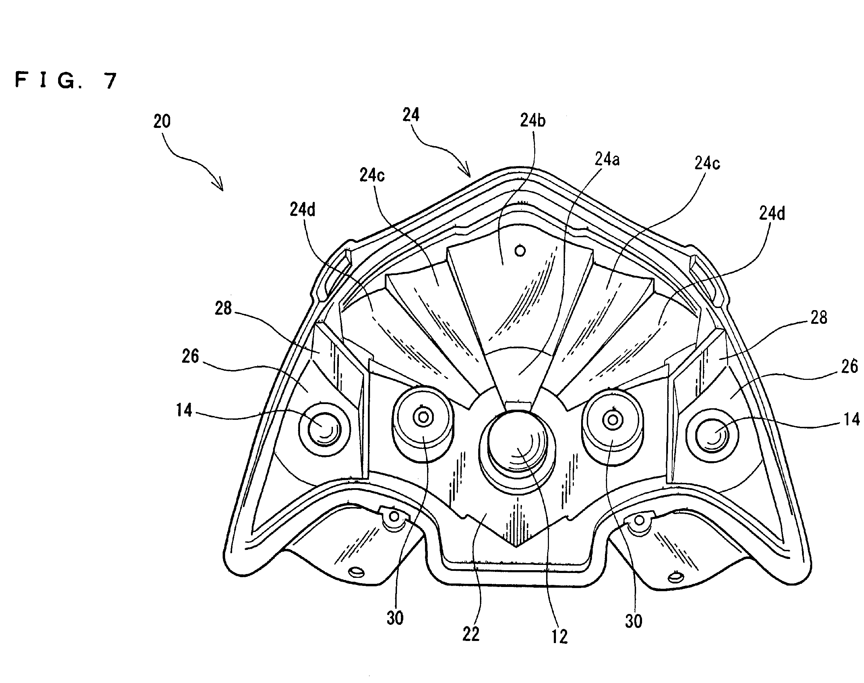

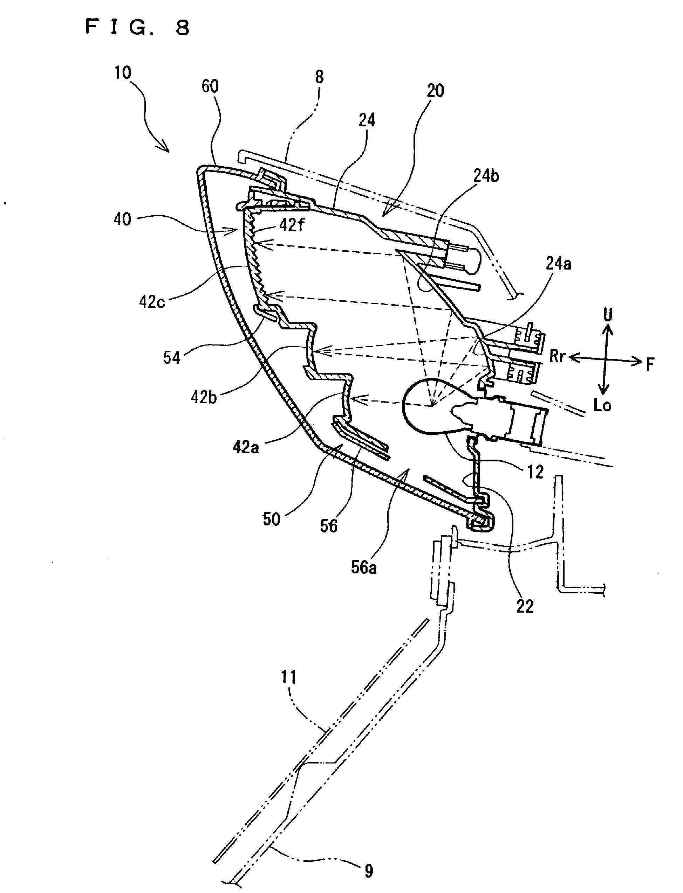

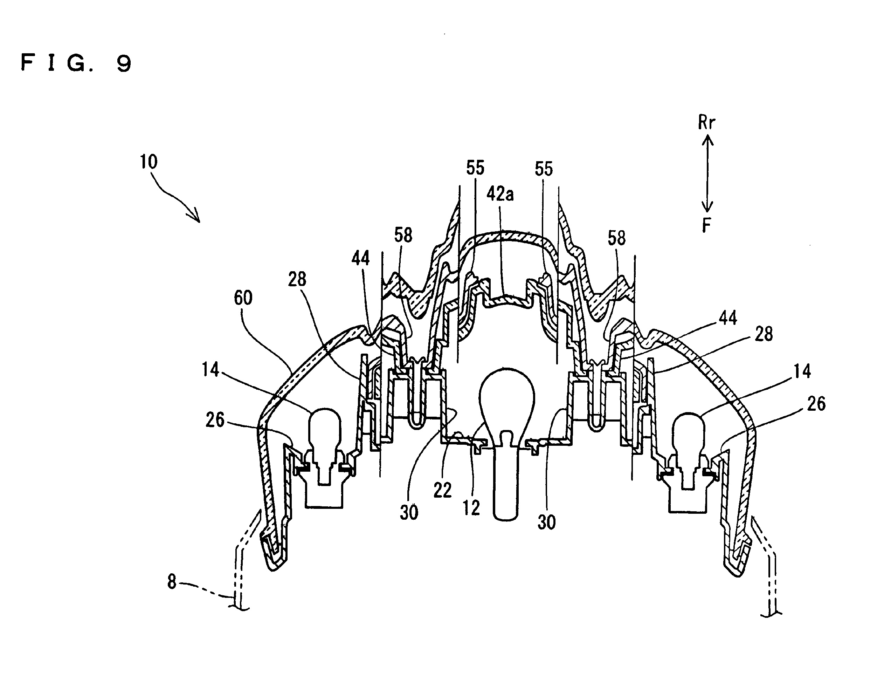

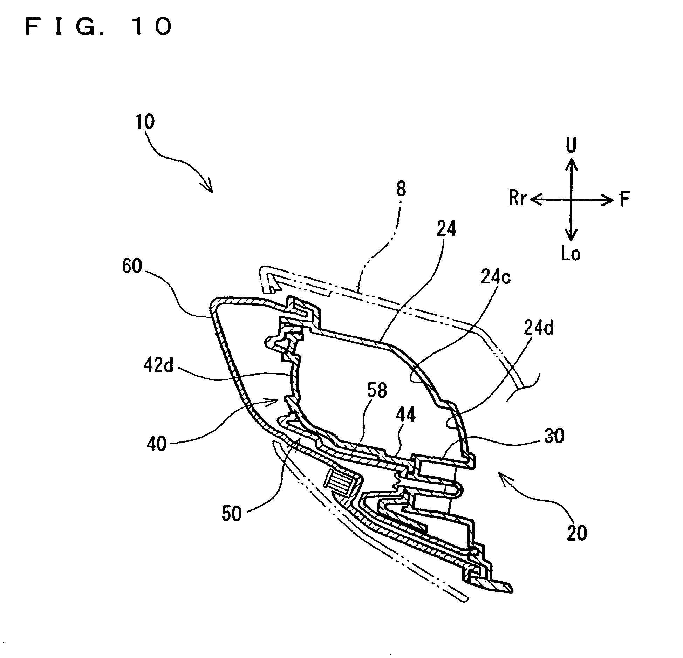

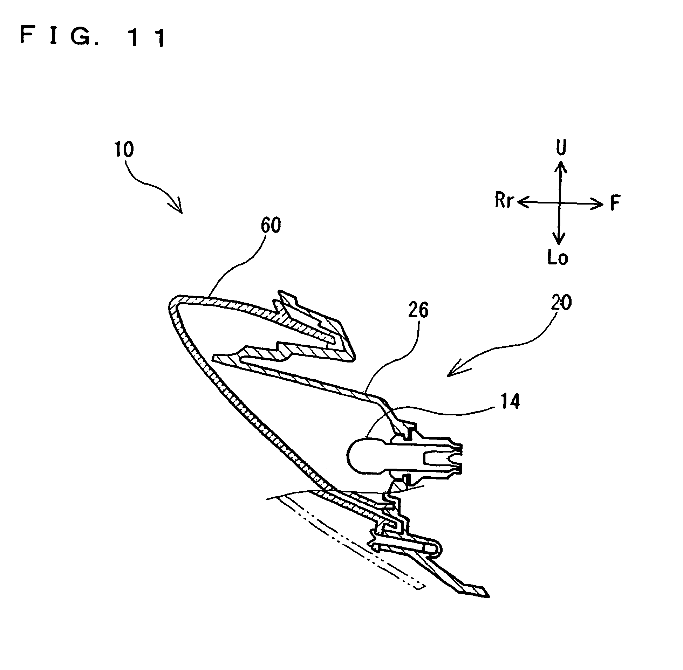

Fig. 1 is a side view of a motorcycle 1 according to an embodiment of the present invention. Fig. 2 through Fig. 6 show a taillight 10 according to an embodiment of the present invention, in a side view, a rear view, a plan view, a front view and an exploded perspective view, respectively. Fig. 7 is a rear view of a holding member 20 included in the taillight 10. Fig. 8 is a sectional view taken in lines A-A in Fig. 3. Fig. 9 is a sectional view taken in lines B-B in Fig. 3. Fig. 10 is a sectional view taken in lines C-C in Fig. 3. Fig. 11 is a sectional view taken in lines D-D in Fig. 3. It should be noted here that in these figures, alphabetical characters "F", "Rr", "U" and "Lo" indicate "forward", "rearward", "upward" and "downward" directions respectively, of the motorcycle 1 and the taillight 10.

Referring to Fig. 1, the motorcycle 1 is of a so-called underbone type, and includes a motorcycle body 2. The motorcycle body 2 includes an engine 3 and a handlebar 4. The engine 3 is at a low center region of the motorcycle body 2 whereas the handlebar 4 is at a front region of the motorcycle body 2. A front wheel 5a steerable by the handlebar 4 is ahead of the engine 3 whereas a rear wheel 5b rotated by power from the engine 3 is behind the engine 3. Also, the motorcycle body 2 includes a seat frame 6, a seat 7, a grab bar 7a, side covers 8, a rear fender 9, the taillight 10 and a license plate 11. The seat frame 6 extends from a center portion of the motorcycle body 2 in an obliquely rearward and upward direction. The seat 7 is above the seat frame 6. The seat 7 shown in the figure is an example for two persons. The grab bar 7a is near a rear portion of the seat 7 for the passenger rider to grab. The side covers 8 are on both sides of the seat frame 6. The motorcycle body 2 has its rear portion, which is constituted mainly by the seat 7 and the side covers 8, of a sharply-angled shape extending in an obliquely rearward and upward direction. The taillight 10 is disposed at a rear end portion of the motorcycle body 2 as described above. The rear fender 9 is below the taillight 10, and extends in an obliquely rearward and downward direction. The rear fender 9 has a back surface, an upper region of which serves as a mounting portion 9a for the license plate 11. Therefore, the license plate 11 is provided below the taillight 10.

Referring to Fig. 2 through Fig. 7, the taillight 10 includes a taillight light source 12 provided by a bulb; a plurality (two in the present embodiment) of signal-light sources 14; a holding member 20; a translucent member 40; a non-translucent member 50; and a transparent cover 60; and is constituted as a unit.

As shown in Fig. 8, the holding member 20 holds the taillight light source 12 and the signal-light sources 14. The holding member 20 is shaped to have an upper portion which extends in an obliquely rearward and upward direction, protruding so as to cover the translucent member 40 and the non-translucent member 50 (overhanging the translucent member 40 and the non-translucent member 50).

The holding member 20 is formed of a resin for example. As shown in Fig. 7, the holding member 20 includes a wall portion 22, an eave portion 24, a plurality (two in the present embodiment) of side portions 26, and a plurality (two in the present embodiment) of partition portions 28. The wall portion 22 has a backward-oriented rear surface, on which the taillight light source 12 is mounted. The eave portion 24 extends from an upper region of the wall portion 22 in an obliquely rearward and upward direction to cover above the taillight light source 12. The side portions 26 are provided on both sides of the wall portion 22. Each of the side portions 26 is mounted with one of the signal-light sources 14. Each of the partition portions 28 extends rearward, partitioning the eave portion 24 and the wall portion 22 from the side portion 26.

As shown in Fig. 8, the eave portion 24 is formed to have a substantially paraboloidal surface with its focal point provided by the position where the taillight light source 12 is. The eave portion 24 extends from above the taillight light source 12 in an obliquely rearward and upward direction along the tail of the motorcycle body 2. In other words, the eave portion 24 extends in an obliquely rearward and upward direction along the shape of the side cover 8 at a tail region of the motorcycle body 2. The holding member 20 has its back surface, including the back surface of the eave portion 24, entirely coated with a light reflection coating provided by vapor-deposited aluminum, silver coating or the like.

Referring also to Fig. 7, the back surface of the eave portion 24 has a plurality of first through fourth reflection surfaces 24a through 24d for reflecting light from the taillight light source 12 toward various positions in the rear.

Specifically, the first reflection surface 24a is above the taillight light source 12, and the second reflection surface 24b is further above, in an obliquely rearward and upward direction. In a rear view, the first reflection surface 24a and the second reflection surface 24b are on a vertical line which passes through the taillight light source 12. The first reflection surface 24a and the second reflection surface 24b make a substantially fan-shaped structure, becoming wider as they are farther away from the taillight light source 12. The third reflection surfaces 24c are formed on both sides of the first reflection surface 24a and the second reflection surface 24b. Then, on an outer side of each third reflection surface 24c, the fourth reflection surface 24d is formed. Specifically, the eave portion 24 has a plurality (two in the present embodiment) of the third reflection surfaces 24c and a plurality (two in the present embodiment) of the fourth reflection surfaces 24d. Each of the third reflection surfaces 24c and the fourth reflection surfaces 24d is substantially fan-shaped, becoming wider as it is farther away from the taillight light source 12. The third reflection surfaces 24c and the fourth reflection surfaces 24d are approximately half as wide as the second reflection surface 24b, for example.

The holding member 20 also includes a plurality of mounting portions 30, 32 and 34.

As shown in Fig. 7, the plural (two in the present embodiment) mounting portions 30 are cylindrical, extending rearward from the back surface of the wall portion 22, on both sides of the taillight light source 12. Referring to Fig. 9 and Fig. 10, the translucent member 40 and the non-translucent member 50 which are disposed behind the eave portion 24 and the wall portion 22 are mounted to each of the mounting portions 30.

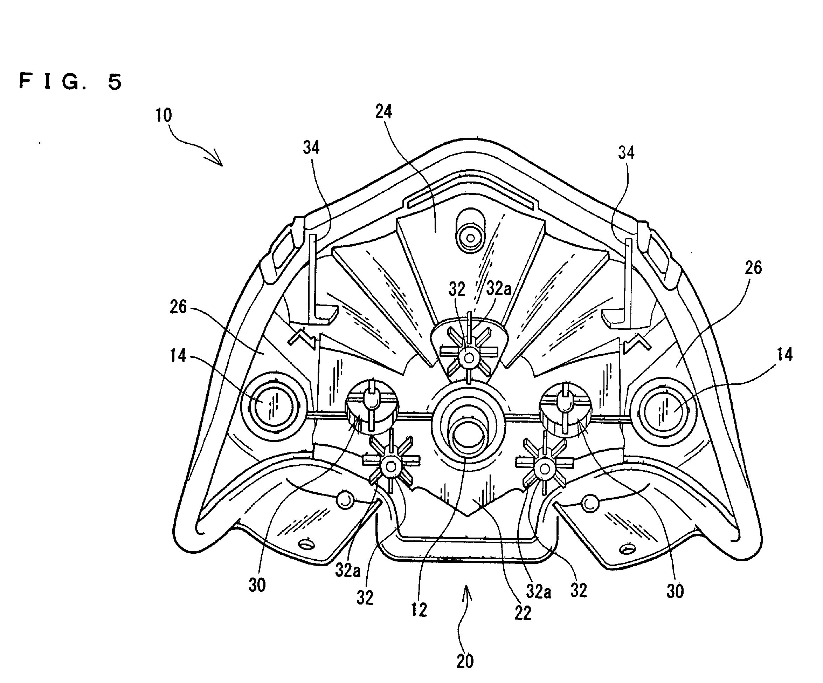

As shown in Fig. 5, the plural (three in the present embodiment) mounting portions 32 protrude forward from the front surface of the wall portion 22, around a base end portion of the taillight light source 12. Each mounting portion 32 has a base end portion reinforced with radially extended ribs 32a. An unillustrated bracket is fixed to each mounting portion 32 with a bolt or the like, in order to mount the taillight 10 to a rear end portion of the seat frame 6.

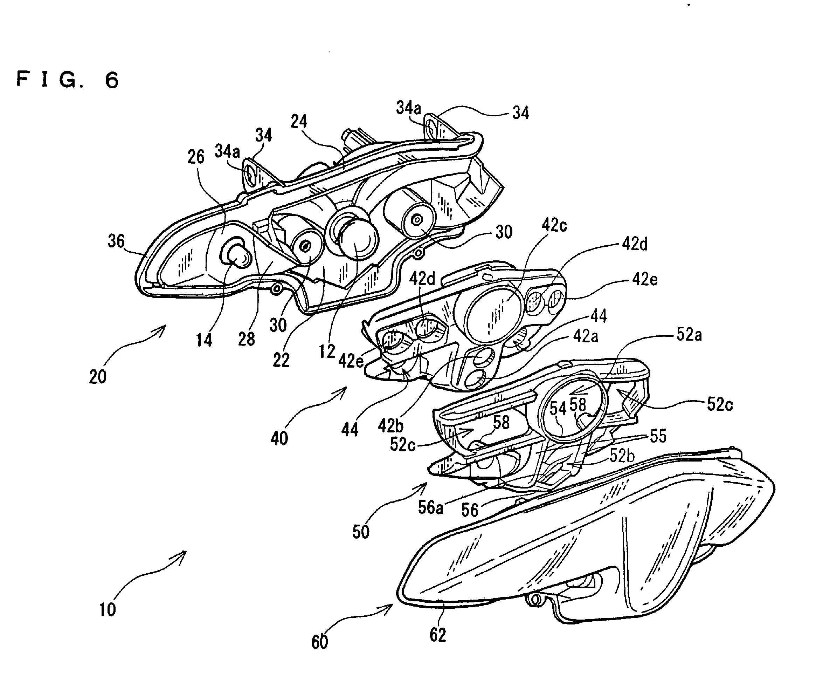

The plural (two in the present embodiment) mounting portions 34 are platy, extending forward from two side regions in the front surface of the eave portion 24. Referring to Fig. 2 and Fig. 6, each mounting portion 34 has an opening 34a. The opening 34a is inserted with an unillustrated projection formed in the side cover 8.

The translucent member 40 covers a space behind the taillight light source 12.

The translucent member 40 is formed of a red-colored, translucent resin material for example. As shown in Fig. 6 and Fig. 8, the translucent member 40 is slightly rearward-extending so that its upper central portion represents its most rearward portion. The translucent member 40 is mounted to the holding member 20 so as to cover a space behind the wall portion 22 and the eave portion 24 of the holding member 20. The taillight light source 12 is located at a low level in a space enclosed by the holding member 20 and the translucent member 40.

Referring also to Fig. 3, the translucent member 40 has a plurality of lens portions 42a through 42e for throwing light to the outside. Each of the lens portions 42a through 42e is formed in a circular shape, and the lens portions 42a through 42e are arranged in a shape like a character T. Of these lens portions, the lens portion 42c is relatively larger, located on an upper central region, and extended slightly rearward from the surrounds. The lens portion 42c has its inner surface (front surface) formed with a light-scattering lens cuts 42f. The lens portions 42a, 42b which are disposed below the lens portion 42c, and the lens portions 42d, 42e which are disposed on the sides of the lens portion 42c are located at slightly more forward and deeper positions than their surrounds (see Fig. 6), being formed to convex in a rearward direction (see Fig. 8 and Fig. 10). The lens portions 42d, 42e are each provided in a plural quantity (two in the present embodiment). The lens portions 42d are on both sides of the lens portion 42c. The lens portions 42e are provided on an outer side of each lens portion 42d.

Specifically, the vertically arranged lens portions 42a through 42c are on a vertical line in a rear view (see Fig. 3) whereas in a side view, they are arranged stepwise in an obliquely rearward and upward direction so that the one on a relatively upper level is located at a more rearward position (see Fig. 8). The lens portions 42c through 42e are arranged in a width direction of the motorcycle in a chevron pattern so that the upper central lens portion 42c is located at the highest level.

As shown in Fig. 8, the taillight light source 12 is located approximately at the same level as the lowermost lens portion 42a, and thus light which is emitted from the taillight light source 12 and travels rearward is directly received by the lens portion 42a. The lens portion 42b located on an intermediate level receives light reflected by the first reflection surface 24a which is formed above the taillight light source 12. The first reflection surface 24a makes concentration irradiation of light (condenses light) toward a center region of the lens portion 42b. The focal point may be on the lens portion 42b, or may be off the lens surface in a forward or a rearward direction. The lens portion 42c located on the uppermost level receives light reflected by the second reflection surface 24b which is formed above and behind the first reflection surface 24a. The second reflection surface 24b makes parallel irradiation of light toward the lens portion 42c.

The lens portions 42d which are disposed on both sides of the lens portion 42c receive light reflected by the third reflection surfaces 24c (see Fig. 7) formed on both sides of the first reflection surface 24a and the second reflection surface 24b. The third reflection surfaces 24c make concentration irradiation of light toward respective center regions of the lens portions 42d. The lens portions 42e which are disposed on two outer sides of the lens portions 42d receive light reflected by the fourth reflection surfaces 24d (see Fig. 7) formed on two outer sides of the third reflection surfaces 24c. The fourth reflection surfaces 24d make concentration irradiation of light toward respective center regions of the lens portions 42e. It should be noted here that the lens portion 42b represents the first translucent portion, the lens portion 42c represents the second translucent portion, the lens portion 42a represents the third translucent portion, and the lens portion 42d represents the fourth translucent portion.

The non-translucent member 50, made of a material which has no translucency, covers the translucent member 40 partially.

The non-translucent member 50 is formed of a resin for example, and has a surface covered with a layer of light reflection coating provided by vapor-deposited aluminum, silver coating or the like. As shown in Fig. 3 and Fig. 6, the non-translucent member 50 has a circular opening 52a at its upper center region, a vertically long opening 52b below the opening 52a, and generally horizontally long openings 52c on both sides of the opening 52a. The openings 52c are provided in a plurality (two in the present embodiment). The openings 52a, 52b, 52c are arranged in a shape like a character T correspondingly to the lens portions 42a through 42e in the translucent member 40. When the non-translucent member 50 is fitted to the translucent member 40, the lens portion 42c appears inside the upper central opening 52a; the two lens portions 42a, 42b appear inside the lower central opening 52b; and the two lens portions 42d, 42e appear inside the two side openings 52c on the upper region.

The opening 52a is edged by a generally cylindrical edge portion 54, which works as a partition between the opening 52a, the opening 52b located under the opening 52a, and the openings 52c located on the sides of the opening 52a. When the non-translucent member 50 is fitted to the translucent member 40, the edge portion 54 covers a region between the lens portion 42c and the lens portion 42b therebelow in the translucent member 40, as well as regions between the lens portion 42c and the lens portions 42d on its sides. Thus, the lens portions 42b through 42d look separated from each other in a rear view. Specifically, the red-colored, translucent lens portions 42b through 42d are separated from each other in a rear view by the non-translucent edge portion 54 which is coated with a light-reflecting material.

The edge portion 54 is provided with a pair of downward extending frame portions 55. The opening 52b is between these frame portions 55.

As shown in Fig. 6 and Fig. 8, the non-translucent member 50 has a lower portion provided with a jaw portion 56 covering a space below the taillight light source 12. The jaw portion 56 has light-shielding capability. The jaw portion 56 is primarily for preventing light from escaping downward from the taillight light source 12. The jaw portion 56 has a center portion provided with an opening 56a for light to pass through. Light from the taillight light source 12 passes through the opening 56a and lights up the license plate 11 mounted on the mounting portion 9a below the taillight 10.

Referring to Fig. 6, the translucent member 40 is provided with mounting portions 44 formed as forward extending cylindrical recesses sunk from the surrounds, on both sides of the T formed by the lens portions 42a through 42e. Specifically, the mounting portions 44 are provided in a plurality (two in the present embodiment). Each of the mounting portions 44 is positioned on an outer side of the lens portions 42a, 42b and below the lens portions 42d, 42e. Also, the non-translucent member 50 is provided with mounting portions 58 formed as forward extending cylindrical recesses sunk from the surrounds, on both sides of the T formed by the openings 52a, 52b, 52c. Specifically, the mounting portions 58 are provided in a plurality (two in the present embodiment). Each of the mounting portions 58 is positioned on an outer side of the opening 52b and below the opening 52c. As shown in Fig. 9 and Fig. 10, the mounting portions 44, 58 are connected with rearward extending mounting portions 30 included in the holding member 20, using tapping screws for example.

The translucent member 40 and the non-translucent member 50 are sealed between the transparent cover 60 and the holding member 20.

Referring to Fig. 6, the transparent cover 60 is formed of a transparent resin for example, and has an edge portion 62 to fit to an edge portion 36 of the holding member 20. Fitting the edge portion 36 of the holding member 20 and the edge portion 62 of the transparent cover 60 to each other provides a sealed space between the holding member 20 and the transparent cover 60. This sealed space is a housing space for the taillight light source 12, the signal-light sources 14, the translucent member 40 and the non-translucent member 50. In the transparent cover 60, upper portions extend farther in a rearward direction, so the transparent cover 60 has a rear end surface extending in an obliquely rearward and upward direction like the eave portion 24 of the holding member 20, the translucent member 40, and the non-translucent member 50. It should be noted here that the signal-light light sources 14 are covered directly by the transparent cover 60 from behind (see Fig. 3 and Fig. 11). According to the motorcycle 1 as described, as shown in Fig. 8, the taillight light source 12 is mounted to the holding member 20, which has the eave portion 24 extending from above the taillight light source 12 in an obliquely rearward and upward direction, overhanging the translucent member 40 and the non-translucent member 50. Also, the eave portion 24 is not formed below the taillight light source 12. Therefore, the taillight 10 can be made thinner than those provided by the conventional technique described earlier. Also, the taillight light source 12 is disposed at a relatively low level, and therefore closely to the center of motorcycle body 2, yet light emitting positions provided by the lens portions 42b, 42c which are supplied with light from the first reflection surface 24a and the second reflection surface 24b are located at a higher level than the taillight light source 12. This improves visual recognition of the taillight 10.

According to the motorcycle 1, as shown in Fig. 3, the lens portions 42a through 42c in the translucent member 40 are arranged on a vertical line in a rear view. This improves visual recognition of the taillight 10, and further, this helps drivers and riders behind the motorcycle 1 recognize a banking direction of the motorcycle 1.

According to the motorcycle 1, as shown in Fig. 8, the lens portions 42a through 42c, which are light emitting positions in the translucent member 40, are disposed in a stepwise arrangement extending in an obliquely rearward and upward direction so that an upper lens portion is located at a more rearward position. Thus it is easy to make the taillight 10 even thinner.

According to the motorcycle 1, as shown in Fig. 8, the translucent member 40 has the lens portion 42a irradiated directly by rearward travelling light from the taillight light source 12. The arrangement makes it possible to dispose a greater number of the lens portions 42a through 42c in the vertical direction in a rear view, than a total number of the first reflection surface 24a and the second reflection surface 24b.

According to the motorcycle 1, as understood with reference to Fig. 3, Fig. 6 and Fig. 8, the non-translucent member 50 has the edge portion 54, which covers the region between the lens portion 42c and the lens portion 42b therebelow as well as regions between the lens portion 42c and the two lens portions 42d on the sides, in the translucent member 40. The arrangement shows the lens portions 42b through 42d as separated from each other in a rear view. The arrangement emphasizes a plurality of light emitting positions, leading to further improvement in visual recognition of the taillight 10.

According to the motorcycle 1, as understood with reference to Fig. 3, Fig. 7 and Fig. 8, the eave portion 24 includes the first reflection surface 24a, the third reflection surfaces 24c and the fourth reflection surfaces 24d which make concentration irradiation of light toward the lens portions 42b, 42d, 42e in the translucent member 40. In this arrangement the taillight 10 looks as if it has a plurality of light sources, and this further improves visual recognition of the taillight 10.

According to the motorcycle 1, as understood with reference to Fig. 8 and Fig. 10, the lens portions 42b, 42d, 42e in the translucent member 40 are convex in a reared direction. This further enhances the visual effect that the taillight 10 looks as if it has a plurality of light sources.

According to the motorcycle 1, as shown in Fig. 8, the first reflection surface 24a makes concentration irradiation of light toward the lens portion 42b of the translucent member 40 whereas the second reflection surface 24b makes parallel irradiation of light toward the lens portion 42c of the translucent member 40. The arrangement makes the lens portion 42c, which is located at an upper level, have a higher brightness than the lens portion 42b which is located at a lower level, leading to further improvement in visual recognition of the taillight 10.

According to the motorcycle 1, as shown in Fig. 3 and in Fig. 7, the eave portion 24 has the third reflection surfaces 24c and the fourth reflection surfaces 24d on both sides of the first reflection surface 24a and the second reflection surface 24b in the width direction of the motorcycle. The third reflection surfaces 24c and the fourth reflection surfaces 24d direct light respectively to the lens portions 42d and 42e located on both sides of the lens portion 42c in the translucent member 40. In the arrangement, the light emitting positions are concentrated at a relatively high level, leading to further improvement in visual recognition of the taillight 10.

According to the motorcycle 1, as understood with reference to Fig. 3 and to Fig. 6, the lens portions 42d are provided on both sides of the lens portion 42c in the width direction of the motorcycle, and the lens portions 42b, 42c and 42d are arranged in a shape like a character T. By disposing the lens portions 42d at a high level, and on both sides of the lens portion 42c as described, the arrangement further improves visual recognition of the taillight 10.

According to the motorcycle 1, as shown in Fig. 3, the lens portion 42c, which is located at the highest level of all the lens portions 42a through 42e in the translucent member 40, has a greater area than any of the lens portions 42a, 42b, 42d, 42e. This further improves visual recognition of the taillight 10.

According to the motorcycle 1, as shown in Fig. 7, the second reflection surface 24b in the eave portion 24 has a greater area than the first reflection surface 24a. Thus, a greater amount of light is directed to the lens portion 42c which is located at the highest level, making it possible to further improve visual recognition of the taillight 10.

According to the motorcycle 1, as shown in Fig. 8, the mounting portion 9a of the license plate 11 is positioned below the taillight 10, the taillight light source 12 is covered from below by the jaw portion 56 of the non-translucent member 50, and the jaw portion 56 has the opening 56a. Therefore, light from the taillight light source 12 passes through the opening 56a and lights up (is supplied to) the license plate 11 mounted on the mounting portion 9a. The arrangement allows easy recognition of the information indicated on the license plate 11 even at night for example. Although the taillight light source 12 is located at a low level in order to light the license plate 11, the eave portion 24 has the first through the fourth reflection surfaces 24a, 24b, 24c, 24d, and the light reflected thereby is received by the lens portions 42b, 42c, 42d, 42e which are disposed at a higher level than the taillight light source 12. The arrangement makes it possible to provide light emitting positions of the taillight 10 at high levels, and to improve visual recognition of the taillight 10.

As has been described, the taillight 10 according to the present invention is suitably applicable to the motorcycle 1 which has the motorcycle body 2 with a sharply-angled tail portion extending in an obliquely rearward and upward direction.

The motorcycle according to the present invention is not limited to those of underbone types, but may be of any other types such as moped types, scooter types and sports types. Also, the motorcycle according to the present invention may be electric motorcycle.

It should be noted here that present invention may have an arrangement that the first reflection surface makes parallel irradiation of light to the first translucent portion whereas the second reflection surface makes concentration irradiation of light to the second translucent portion. Also, the first reflection surface may make concentration irradiation of light to the first translucent portion while the second reflection surface may make concentration irradiation of light to the second translucent portion.

The first translucent portion need not necessarily be convex in a rearward direction, and the second translucent portion may be convex in a rearward direction. Also, both of the first translucent portion and the second translucent portion may be convex in a rearward direction.

The third reflection surface may be provided on only one of the two sides of the first reflection surface and the second reflection surface in the motorcycle's width direction. Correspondingly to this, the fourth translucent portion may be provided on only one of the two sides of the second translucent portion in the motorcycle's width direction.

The present invention being thus far described in terms of preferred embodiments, it is obvious that these may be varied in many ways within the scope of the present invention. The scope of the present invention is only limited by the accompanied claims.

### LEGEND

- 1: Motorcycle
- 9: Rear fender
- 10: Taillight
- 11: License plate
- 12: Taillight light source
- 14: Signal-light source
- 20: Holding member
- 22: Wall portion
- 24: Eave portion
- 24a: First reflection surface
- 24b: Second reflection surface
- 24c: Third reflection surface
- 24d: Fourth reflection surface
- 26: Side portion
- 28: Partition
- 9a, 30, 32, 34, 44, 58: Mounting portions
- 36, 54, 62: Edge portions
- 40: Translucent member
- 42a, 42b, 42c, 42d, 42e: Lens portions
- 50: Non-translucent member
- 52a, 52b, 52c, 56a: Openings
- 56: Jaw portion
- 60: Transparent cover

## Claims

1. A taillight (10) comprising:
a light source (12);
a holding member (20) for holding the light source (12), having an eave portion (24) extending from above the light source (12) in an obliquely rearward and upward direction; and
a translucent member (40) having at least a first translucent portion (42b) and a second translucent portion (42c) located at an obliquely rearward and upward position from the first translucent portion (42b), and covering the holding member (20) from behind;
**characterized by** the eave portion (24) including:
a first reflection surface (24a) located above the light source (12), for reflecting light from the light source (12) toward the first translucent portion (42b); and
a second reflection surface (24b) located at an obliquely rearward and upward position from the first reflection surface (24a), for reflecting light from the light source (12) toward the second translucent portion (42c).

2. The taillight (10) according to Claim 1, wherein the translucent member (40) further includes a third translucent portion (42a) located at a lower position than the first translucent portion (42b),
the third translucent portion (42a) directly receives light travelling rearward from the light source (12).

3. The taillight (10) according to Claim 1, further comprising a non-translucent member (50) which does not have translucency, provided to cover a region between the first translucent portion (42b) and the second translucent portion (42c).

4. The taillight (10) according to Claim 1, wherein at least one of light supply from the first reflection surface (24a) to the first translucent portion (42b) and light supply from the second reflection surface (24b) to the second translucent portion (42c) is concentration irradiation.

5. The taillight (10) according to Claim 1, wherein at least one of the first translucent portion (42b) and the second translucent portion (42c) is convex in a rearward direction.

6. The taillight (10) according to Claim 1, wherein the first reflection surface (24a) makes concentration irradiation of light toward the first translucent portion (42b),
the second reflection surface (24b) making parallel irradiation of light toward the second translucent portion (42c).

7. The taillight (10) according to Claim 1, wherein the translucent member (40) further includes a fourth translucent portion (42d) provided at least on one side of the second translucent portion (42c),
the eave portion (24) further including a third reflection surface (24c) provided at least on one side of the first reflection surface (24a) and the second reflection surface (24b),
the third reflection surface (24c) reflecting light from the light source (12) toward the fourth translucent portion (42d).

8. The taillight (10) according to Claim 7, wherein the fourth translucent portion (42d) is provided on both sides of the second translucent portion (42c),
the first translucent portion (42b), the second translucent portion (42c) and the fourth translucent portion (42d) being disposed in a shape like a character T.

9. The taillight (10) according to Claim 1, wherein the second translucent portion (42c) has a greater area than the first translucent portion (42b).

10. The taillight (10) according to Claim 1, wherein the second reflection surface (24b) has a greater area than the first reflection surface (24a).

11. The taillight (10) according to Claim 1, further comprising a jaw portion (56) located below the light source (12),
the jaw portion (56) having light-shielding capability and having an opening (56a) for light from the light source (12) to pass through.

12. A motorcycle comprising the taillight (10) according to Claim 1.

13. The motorcycle according to Claim 12, wherein the taillight (10) further comprising a jaw portion (56) located below the light source (12),
the jaw portion (56) having light-shielding capability and having an opening (56a) for light from the light source (12) to pass through,
the motorcycle further comprising a license plate (11) supplied with light from the light source (12) which passes through the opening (56a).

## Patentansprüche

1. Schlusslicht (10), das umfasst:
eine Lichtquelle (12);
eine Haltelement (20) zum Halten der Lichtquelle (12) mit einem Traufenabschnitt (24), der sich von oberhalb der Lichtquelle (12) schräg nach hinten und oben erstreckt; und
ein lichtdurchlässiges Element (40) mit mindestens einem ersten lichtdurchlässigen Abschnitt (42b) und einem zweiten lichtdurchlässigen Abschnitt (42c), der an einer Position schräg hinter und oberhalb des ersten lichtdurchlässigen Abschnitts (42b) angeordnet ist, und welches das Halteelement (20) von hinten abdeckt, **dadurch gekennzeichnet, dass** der Traufenabschnitt (24) Folgendes aufweist:
eine erste Reflexionsfläche (24a), die oberhalb der Lichtquelle (12) angeordnet ist, um Licht von der Lichtquelle (12) in Richtung des ersten lichtdurchlässigen Abschnitts (42b) zu reflektieren; und
eine zweite Reflexionsfläche (24b), die an einer Position schräg hinter und oberhalb der ersten Reflexionsfläche (24a) angeordnet ist, um Licht von der Lichtquelle (12) in Richtung des zweiten lichtdurchlässigen Abschnitts (42c) zu reflektieren.

2. Schlusslicht (10) nach Anspruch 1, wobei das lichtdurchlässige Element (40) des Weiteren einen dritten lichtdurchlässigen Abschnitt (42a) aufweist, der an einer tieferen Position als der erste lichtdurchlässige Abschnitt (42b) angeordnet ist,
wobei der dritte lichtdurchlässige Abschnitt (42a) direkt Licht empfängt, das von der Lichtquelle (12) nach hinten abgestrahlt wird.

3. Schlusslicht (10) nach Anspruch 1, des Weiteren umfassend ein nicht lichtdurchlässiges Element (50), das über keine Lichtdurchlässigkeit verfügt und so angeordnet ist, dass es einen Bereich zwischen dem ersten lichtdurchlässigen Abschnitt (42b) und dem zweiten lichtdurchlässigen Abschnitt (42c) abdeckt.

4. Schlusslicht (10) nach Anspruch 1, wobei von einer Lichtzuführung von der ersten Reflexionsfläche (24a) zu dem ersten lichtdurchlässigen Abschnitt (42) und einer Lichtzuführung von der zweiten Reflexionsfläche (24b) zu dem zweiten lichtdurchlässigen Abschnitt (42c) mindestens eines Bündelungsstrahlung ist.

5. Schlusslicht (10) nach Anspruch 1, wobei von dem ersten lichtdurchlässigen Abschnitt (42b) und dem zweiten lichtdurchlässigen Abschnitt (42c) mindestens einer in rückwärtiger Richtung konvex ist.

6. Schlusslicht (10) nach Anspruch 1, wobei die erste Reflexionsfläche (24a) eine Licht-Bündelungsstrahlung in Richtung des ersten lichtdurchlässigen Abschnitts (42b) bewirkt,
und die zweite Reflexionsfläche (24b) eine parallele Lichtstrahlung in Richtung des zweiten lichtdurchlässigen Abschnitts (42c) bewirkt.

7. Schlusslicht (10) nach Anspruch 1, wobei das lichtdurchlässige Element (40) des Weiteren einen vierten lichtdurchlässigen Abschnitt (42d) aufweist, der mindestens auf einer Seite des zweiten lichtdurchlässigen Abschnitts (42c) angeordnet ist,
der Traufenabschnitt (24) des Weiteren eine dritte Reflexionsfläche (24c) aufweist, die mindestens auf einer Seite der ersten Reflexionsfläche (24a) und der zweiten Reflexionsfläche (24b) angeordnet ist, wobei die dritte Reflexionsfläche (24c) Licht von der Lichtquelle (12) in Richtung des vierten lichtdurchlässigen Abschnitts (42d) reflektiert.

8. Schlusslicht (10) nach Anspruch 7, wobei der vierte lichtdurchlässige Abschnitt (42d) auf beiden Seiten des zweiten lichtdurchlässigen Abschnitts (42c) angeordnet ist,
der erste lichtdurchlässige Abschnitt (42b), der zweite lichtdurchlässige Abschnitt (42c) und der vierte lichtdurchlässige Abschnitt (42d) in der Form des Buchstabens T angeordnet sind.

9. Schlusslicht (10) nach Anspruch 1, wobei der zweite lichtdurchlässige Abschnitt (42c) eine größere Fläche als der erste lichtdurchlässige Abschnitt (42b) aufweist.

10. Schlusslicht (10) nach Anspruch 1, wobei die zweite Reflexionsfläche (24b) eine größere Fläche als die erste Reflexionsfläche (24a) aufweist.

11. Schlusslicht (10) nach Anspruch 1, des Weiteren umfassend einen Backenabschnitt (56), der unterhalb der Lichtquelle (12) angeordnet ist,
wobei der Backenabschnitt (56) Lichtabschirmungs-Fähigkeit sowie eine Öffnung (56a) aufweist, damit Licht von der Lichtquelle (12) hindurch gelangen kann.

12. Motorrad, umfassend das Schlusslicht (10) nach Anspruch 1.

13. Motorrad nach Anspruch 12, wobei das Schlusslicht (10) des Weiteren einen Backenabschnitt (56) umfasst, der unterhalb der Lichtquelle (12) angeordnet ist,
wobei der Backenabschnitt (56) Lichtabschirmungs-Fähigkeit sowie eine Öffnung (56a) aufweist, damit Licht von der Lichtquelle (12) hindurch gelangen kann,
und wobei das Motorrad des Weiteren ein Nummernschild (11) umfasst, dem Licht von der Lichtquelle (12) zugeführt wird, das durch die Öffnung (56a) gelangt.

## Revendications

1. Feu arrière (10) comprenant :
- une source lumineuse (12) ;
- un élément de support (20) pour supporter la source lumineuse (12), comportant une partie en avancée (24) s'étendant depuis le dessus de la source lumineuse (12) dans une direction obliquement vers l'arrière et le haut ; et
- un élément translucide (40) comportant au moins une première partie translucide (42b) et une deuxième partie translucide (42c) située en une position obliquement vers l'arrière et le haut de la première partie translucide (42b) et couvrant l'élément de support (20) depuis l'arrière ;
- **caractérisé en ce que** la partie en avancée (24) comprend :
- une première surface de réflexion (24a) située au-dessus de la source lumineuse (12) pour réfléchir la lumière de la source lumineuse (12) vers la première partie translucide (42b) ; et
- une deuxième surface de réflexion (24b) située en une position obliquement vers l'arrière et le haut de la première surface de réflexion (24a) pour réfléchir la lumière de la source lumineuse (12) vers la deuxième partie translucide (42c).

2. Feu arrière (10) selon la revendication 1, dans lequel l'élément translucide (40) comprend en outre une troisième partie translucide (42a) située en une position plus basse que la première partie translucide (42b),
- la troisième partie translucide (42a) recevant directement la lumière dirigée vers l'arrière de la source lumineuse (12).

3. Feu arrière (10) selon la revendication 1, comprenant en outre un élément non translucide (50), ne présentant pas de translucidité, prévu pour couvrir une région entre la première partie translucide (42b) et la deuxième partie translucide (42c).

4. Feu arrière (10) selon la revendication 1, dans lequel au moins une lumière parmi la lumière délivrée depuis la première surface de réflexion (24a) à la première partie translucide (42b) et la lumière délivrée depuis la deuxième surface de réflexion (24b) à la deuxième partie translucide (42c) est une irradiation à concentration.

5. Feu arrière (10) selon la revendication 1, dans lequel au moins une partie parmi la première partie translucide (42b) et la deuxième partie translucide (42c) est convexe dans une direction vers l'arrière.

6. Feu arrière (10) selon la revendication 1, dans lequel la première surface de réflexion (24a) occasionne une irradiation à concentration de lumière vers la première partie translucide (42b),
- la deuxième surface de réflexion (24b) occasionnant une irradiation parallèle de lumière vers la deuxième partie translucide (42c).

7. Feu arrière (10) selon la revendication 1, dans lequel l'élément translucide (40) comprend en outre une quatrième partie translucide (42d) prévue au moins sur un côté de la deuxième partie translucide (42c),
- la partie en avancée (24) comprenant en outre une troisième surface de réflexion (24c) prévue au moins sur un côté de la première surface de réflexion (24a) et de la deuxième surface de réflexion (24b),
- la troisième surface de réflexion (24c) réfléchissant la lumière de la source lumineuse (12) vers la quatrième partie translucide (42d).

8. Feu arrière (10) selon la revendication 7, dans lequel la quatrième partie translucide (42d) est prévue sur les deux côté de la deuxième partie translucide (42c),
- la première partie translucide (42d), la deuxième partie translucide (42c) et la quatrième partie translucide (42d) étant disposées selon une forme semblable à un caractère T.

9. Feu arrière (10) selon la revendication 1, dans lequel la deuxième partie translucide (42c) a une aire plus importante que la première partie translucide (42b).

10. Feu arrière (10) selon la revendication 1, dans lequel la deuxième surface de réflexion (24b) a une aire plus importante que la première surface de réflexion (24a).

11. Feu arrière (10) selon la revendication 1, comprenant en outre une partie en mâchoire (56) située au-dessous de la source lumineuse (12),
- la partie en mâchoire (56) présentant une capacité d'écran à la lumière et comportant une ouverture (56a) pour que la lumière de la source lumineuse (12) la traverse.

12. Motocyclette comprenant le feu arrière (10) selon la revendication 1.

13. Motocyclette selon la revendication 12, dans laquelle le feu arrière (10) comprend en outre une partie en mâchoire (56) située au-dessous de la source lumineuse (12),
- la partie en mâchoire (56) présentant une capacité d'écran à la lumière et comportant une ouverture (56a) pour que la lumière de la source lumineuse (12) la traverse,
- la motocyclette comprenant en outre une plaque d'immatriculation (11) recevant la lumière de la source lumineuse (12) traversant l'ouverture (56a).
